Europäisches Patentamt

(19) European Patent Office

Office européen des brevets

(11) Publication number: **0 133 596**
**A2**

(12) **EUROPEAN PATENT APPLICATION**

(21) Application number: **84305236.6**

(22) Date of filing: **01.08.84**

(51) Int. Cl.⁴: **F 16 B 21/18**

(30) Priority: **11.08.83 GB 8321628**

(43) Date of publication of application:
**27.02.85 Bulletin 85/9**

(84) Designated Contracting States:
**AT BE CH DE FR IT LI NL SE**

(71) Applicant: **BENDIX LIMITED**
**Douglas Road**
**Kingswood, Bristol BS15 2NL(GB)**

(72) Inventor: **Frost, Michael Alan**
**244 Charlton Road**
**Kingswood Bristol(GB)**

(74) Representative: **Turner, Alan Reginald**
**BENDIX LIMITED Douglas Road**
**Kingswood, Bristol BS15 2NL(GB)**

(54) **Brake actuator linkages.**

(57) A brake actuator linkage has a swivel which comprises an axially rotatable member (4) extending through an aperture (3) in a clevis and constrained by a head (5) against movement in one direction has a spring clip having a first part (10) gripping the rotatable member and a second part (11, 12) extending partly around the clevis to resiliently engage the head and continuously urge it against the clevis.

EP 0 133 596 A2

Croydon Printing Company Ltd

Brake Actuator Linkages

This invention relates to a brake actuator linkage including a swiven element especially a swivelling clevis.

In linkages for actuators in brake systems it is usual to make adjustable connections between a pneumatically operable brake actuator and a brake mechanism via a swivel formed by an adjustable screw threaded member a head of which is rotatably retained in an aperture in a clevis whereby in the assembled mechanism the adjustable member is rotatable in relation to the clevis. Such a swivel is simple to manufacture and assemble but is susceptible to undesired axial movement between the head of the threaded member and the clevis due to road or engine vibration. Such movement can cause wear and undesirable rattle on the chassis of a vehicle.

The present invention provides a brake actuator linkage having a swivel element comprising an axially rotatable member extending through an aperture in a clevis and retained therein by a head characterised by a resilient member acting against the head towards the aperture to prevent axial movement between the rotatable member and the clevis.

Preferably, the resilient member comprises a clip having a first part which grips the rotatable member and integral therewith a part which extends partly around the clevis to resiliently engage the head.

In one embodiment of the invention such a clip may also serve to secure one end of a flexible protective gaiter for protecting against ingress of contaminants an aperture through which an actuator rod passes.

In order that the invention may be more clearly understood and readily carried into effect the same will be further described by way of example with reference to the accompanying drawing of which:

Fig. 1 illustrates diagramatically a part sectional view of a brake actuator linkage in accordance with the invention,

Fig. 2 illustrates a side view of a resilient member for use in the linkage of Fig. 1,

Fig. 3 illustrates an end-on view of the member of Fig.2

Fig. 4 illustrates an underneath view of the resilient member and,

Fig. 5 illustrates a part-sectional view of part of such a linkage and including a resilient protective gaiter.

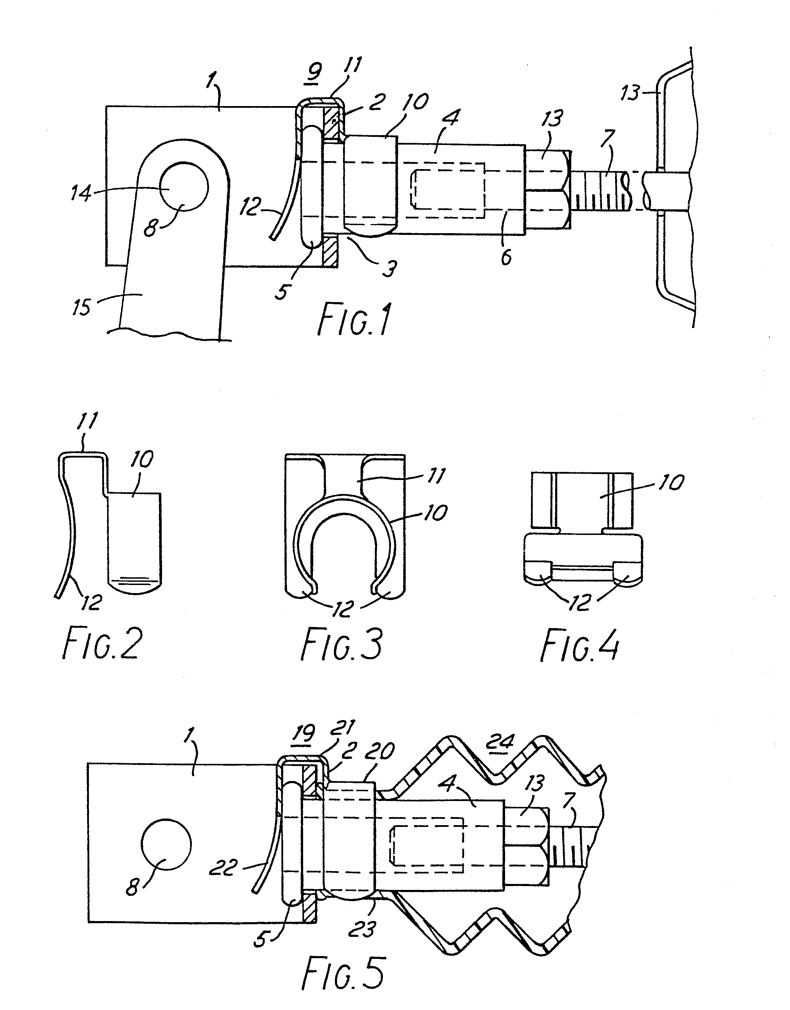

Referring to Fig. 1 in the linkage shown one side plate reference 1 of a clevis which is joined to a further side plate via a transverse part 2 provided with an aperture 3. Thus the transverse part 2 joins two side plates such as 1 together and the aperture 2 is a clearance fit for an axially rotatable member 4
having a hexagon 13 at one end and a head 5 of which is
appreciably larger than the aperture 3.  The member 4
is through drilled and provided with an internal
threaded part 6 which is threadedly adjustably engageable
with the end of a threaded force output rod 7 of an
actuator (not shown).  The clevis has aligned transverse
drillings 8 by means of which and a pin 14 retained
therein is provided in a linkage between the end 7 of
the actuator rod of a brake actuator 13 and a lever 15
brake mechanism.

In order to maintain the head 5 firmly in engagement
with the clevis to eliminate looseness and rattle in
operation, a resilient member 9 is provided with a
part 12 which acts against the head 5.   As more clearly
shown in Figs. 2, 3 and 4, the member 9 comprises a
clip having first part 10 which resiliently grips the
external cylindrical surface of the member 4, the part
10 being joined by a narrow intermediate part 11
the part 12 which engages resiliently with the head 5.
The clip 9 is constructed of spring-steel suitably
plated for weather protection.  The part 12 has two
spaced parts such as to permit threaded adjustment of
the member 4 in relation to the rod 7 by means of a
spanner engageable with hexagon 13 (Fig. 1) whilst
allowing the threaded rod 7 to pass through the member
4 without interference by the resilient means 9.

Although such adjustment may be excessive for normal
running adjustment in relation to a brake mechanism, such adjustment may be desirable in the case of a spring brake actuator in order to permit mechanical release of·the force of the spring of the spring brake actuator in the event of release being required when there is no pressure available or, alternatively, during initial setting up.

Referring to Fig. 5, the swivel element shown therein is substantially identical to that shown in Fig. 1 and with the exception of the clip the parts thereof have been given the same reference numerals. In this embodiment the clip is denoted by reference 19 and the first part thereof which clips around the member 4 is made of sufficiently larger internal diameter to accomodate a close fitting outer end 23 of a corrugated flexible protective gaiter 24. The other end of the gaiter 24 (now shown) is firmly secured to the body of the brake actuator to provide complete protection against the ingress of road grit and water through the aperture via which the rod 7 passes. It is, therefore, seen that the resilient member 19 constructed in the manner shown now serves the dual purpose of preventing axial movement between the rotatable member and the clevis and of firmly securing the outer end of the flexible gaiter.

CLAIMS                    .                    **0133596**

1.    A brake actuator linkage having a swivel element
comprising an axially rotatable member (4) extending
through an aperture (3) in a clevis (1, 2) and
retained therein by a head (5) and characterised by a
resilient member (9) acting against the head towards
the aperture to prevent axial movement between the
rotatable member and the clevis.                    •

2.    A linkage as claimed in claim 1 characterised
by the resilient member (9) comprising a clip having a
first part (10) which grips the rotatable member and
integral therewith a part (11, 12) which extends
partly around the clevis to resiliently engage the head.

3.    A linkage as claimed in claim 2 characterised
by the first part (20) gripping a close-fitting end
(23) of a flexible protective gaiter (24).

4.    A linkage substantially as described herewith
reference to Figs. 1, 2,3, and 4 or Fig. 5 of the
accompanying drawings.

FIG.1

FIG.2   FIG.3   FIG.4

FIG.5